# EUROPEAN PATENT APPLICATION

(11) **EP 4 005 669 A1**
(43) Date of publication of application: **01.06.2022**
(21) Application number: 20209879.4
(22) Date of filing: 25.11.2020
(51) Int. Cl.: B01J 19/24

(54) **PROPYLENE POLYMERIZATION PLANT REVAMPING PROCESS**

(71) Applicant: Borealis AG, 1020 Vienna (AT)
(72) Inventor: BERGSTRA, Michiel, 3583 Beringen (BE); COX, Danny, 3583 Beringen (BE); NYFORS, Klaus, 06101 Porvoo (FI); MOLIN, Claus, 1220 Vienna (AT)
(74) Representative: Maiwald Patent- und Rechtsanwaltsgesellschaft mbH

(57) **Abstract**

Method of revamping a bulk loop reactor propylene plant by incorporation of a gas phase reactor having high capacity.

## Description

### Background

A high number of propylene polymerization plants as operated worldwide use various bulk processes for producing polypropylene. As an example, the Spheripol process may be mentioned which is a bulk slurry process, whereby in the typical Spheripol configuration, two bulk loop reactors coupled in series are optionally connected to at least one downstream gas-phase reactor, with this downstream gas-phase reactor being relatively small. A typical plant combines two loop reactors with a capacity of x tons per hour and a gas-phase reactor with a capacity of 1/10 x tons per hours. Such configuration is limited to a total capacity of about 1 1/10 x tons per hour. For example if the loops produce in total 20 ton per hour then the additional gas phase reactor will produce additionally 2 ton per resulting in a total production of 22 ton per hour. Obviously the capacity is even lower when only one loop reactor is used. Generally speaking, bigger plants also have lower energy consumption per ton of polymer produced. Thus, a bigger plant with higher capacity is generally desirable. For increasing capacity the loop reactors could be enlarged. This could be done by either enlarging the legs of each loop reactor or adding additional legs to both or one reactor. Next to enlarging the reactors for example also the monomer purging and catalyst deactivation steps have to be debottlenecked in order to keep the same purity of polymer product.

For examples, a conventional revamp from an existing bulk propylene polymerization process may comprise increasing feed capacity of catalyst, increasing feed capacity of propylene, increasing size of the loop reactor(s) particularly increasing length for heat transfer area, increasing volume of drying vessel, increasing capacity of recovery compressors, pumps and scrubbers.

All above mentioned items mean removing and replacing equipment, piping and instruments in an existing plant. In any case of major revamp project the downstream finishing section shall also be debottlenecked, i.e. the homogenization (extruder) and pelletizing section.
Anyhow, the revamping must be done during complete shutdown and these shutdowns will be much longer and complex compared to normal maintenance and normal projects turnarounds. Complete shutdown understandable allows replacement of pumps and piping with the disadvantage of the shutdown taking too much time. Yet another problem is catalyst mileage. Conventional polypropylene polymerization plants usually show quite limited catalyst mileage which should be addressed when revamping an existing plant.
Thus there are several problems with such revamping of existing propylene polymerization plants.
The present invention provides a method of revamping an existing propylene polymerization plant comprising at least one bulk loop reactor, preferably two bulk loop reactors coupled in series and optionally a gas phase reactor, whereby the existing bulk reactors have a total capacity of x tons per hour, the method comprising,
providing a new gas-phase reactor having a capacity of at least 0.8 x tons per hour, preferably 0.9 x tons - 1.2 x tons per hour next to the existing propylene polymerization plant, connecting the new gas-phase reactor having a capacity of at least 0.8 x tons per hour, preferably 0.9 x tons - 1.2 x tons per hour, with the loop outlet; and
providing a deactivation and degassing unit downstream of the new gas-phase reactor.

Deactivation and degassing units as provided downstream of the new gas-phase reactor are known in the art. Revamping denotes any activity of modifying existing plants.
Providing a new gas-phase reactor usually will be equivalent with building a new gas-phase reactor next to an existing plant. During such construction work, the existing plant may still be operated. Once construction work is finished, the optional existing gas phase reactor as well as any further optional units such as high pressure flash, low pressure flash, steamer and dryer with scrubber may be taken out of service at least temporarily by simple switching to the new gas-phase reactor by means of a three way valve or similar equipment.
Having a "capacity of at least 0.8 x tons per hour" means that the capacity of the new gas-phase reactor is at least 0.8 times the total capacity of the existing bulk loop reactors, e.g. the total capacity of the existing bulk loop reactor when there is only a single bulk reactor or alternatively the total capacity of existing two loop reactors when there are two loop reactors, for example two loop reactors coupled in series. The same shall apply when there are more than three bulk reactors. The capacity of a potentially present gas phase reactor is not considered.

Preferably the deactivation and degassing unit downstream of the new gas-phase reactor includes a product receiver tank (7), a purge bin (8), a propylene nitrogen recovery unit (9), a distillation column (11) and a vapour recovery line (38).

Said distillation column (11) is preferably coupled to a reflux recovery feed vessel (12), whereby said reflux recovery feed vessel (12) is coupled with the vapour recovery line (38).

More preferably, the method includes providing a product discharge vessel (6) downstream of the new gas-phase reactor (3) and upstream of the product receiver tank (7). Such product discharge vessel (6) significantly improves the once through conversion (per pass) of the polymerization plant. The solids concentration increases in such outlet vessel compared to a set-up without such outlet vessel. Density of fluidized bed versus density of moving bed is shifted such that gas out take is reduced significantly. Thus, the need for compression is reduced.

In a further aspect, the method according to the present invention includes the provision of a product receiver tank (7) which is coupled to said column (7) with a compressor (10) between. In yet a further aspect, said distillation column (11) is preferably coupled to a reflux recovery feed vessel (12), whereby said reflux recovery feed vessel (12) is coupled with vapour recovery line (38). Such configuration allows separation of propylene from for example oligomers and the recycling of vapour propylene via vapour recovery line (38) back to said new gas phase reactor (3) and recycling condensed propylene (45) to the propylene feed tank optionally partly via a propylene - propane splitter. The configuration as described is particularly beneficial for producing random polypropylene copolymers.

The method according to the present invention is further characterized by an extremely short shutdown for transition from the existing plant: the transition from the existing propylene polymerization plant to the revamped propylene polymerization plant preferably does not involve a shutdown of more than 24 hours.

In additional and also preferred aspects, the method according to the present invention enables increasing the once-through conversion, and/or increasing the catalyst mileage and/or increasing the throughput of an existing propylene polymerization plant.
In a particularly preferred aspect, the method according to the present invention includes
- a deactivation and degassing unit downstream of the new gas-phase reactor which includes a product receiver tank (7), a purge bin (8), a propylene nitrogen recovery unit (9), a distillation column (11) and a vapour recovery line (38), and the method further comprises providing
- a product discharge vessel (6) downstream of the new gas-phase reactor (3) and upstream of the product receiver tank (7), and wherein further
- the product receiver tank (7) is coupled to said distillation column (11) with a compressor (10) between, and wherein
- said distillation column (11) is coupled to a reflux recovery feed vessel (12), whereby said reflux recovery feed vessel (12) is coupled with the vapour recovery line (38).

Thus, in a preferred aspect, the present invention is concerned with the use of the method as described herein and particularly the preferred method as described above for increasing the once-through conversion, and/or increasing the catalyst mileage and/or increasing the throughput of an existing propylene polymerization plant.

In a preferred aspect, the revamped propylene polymerization plant is suitable for producing random polypropylene copolymer and/or polypropylene homopolymer. In yet a further aspect, the existing polypropylene plant is a plant suitable for producing heterophasic polypropylene copolymers.

### Detailed description

The present invention shall be discussed in more detail with reference to figure.
A typical existing polypropylene plant to be revamped (such as described in Ullmann's Polymers and Plastics: Products and Processes 2016 Wiley-VCH Verlag GmbH & CO KGaA, Weinheim ISBN: 978-3-527-33823-8 (page 951) comprises two loop reactors and an optional gas phase reactor. After polymerization in the loop reactors the polymer is separated from the liquid propylene by flashing the propylene at an elevated pressure so the flashed propylene can be condensed in a heat exchanger using cooling water. The polymer is then transferred from the high flash tank to the downstream low pressure degassing step, the deactivation step with steam and the drying step.
Optionally the polymer is directed first from the high pressure flash to the gas phase reactor and then the product from the gas phase reactor is discharged to the low pressure degassing step. In such typical existing polypropylene plants, the gas phase reactor being connected by a flash usually has limited capacity, i.e. the total capacity of the plant is mainly determined by the total capacity of the loop reactors.

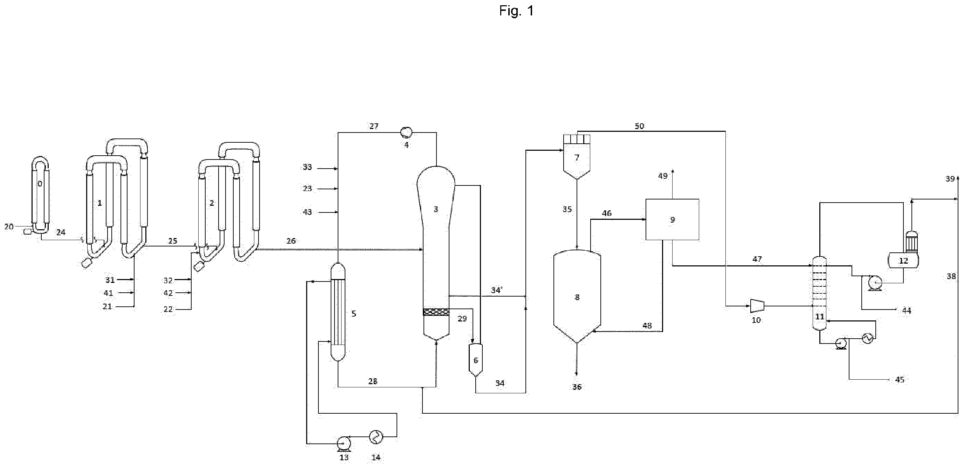

Fig. 1 is a schematic drawing of the revamped propylene plant according to the present invention.

### Reference numbers for Fig. 1

- 20: feed lines to prepolymerization reactor
- 0: prepolymerization reactor
- 1: first loop reactor
- 21: feed line for propylene to the first loop reactor
- 31: feed line for comonomer to the first loop reactor
- 41: feed line for hydrogen to the first loop reactor
- 24: first feed line
- 25: loop reactors connecting line
- 2: second loop reactor
- 22: feed line for propylene to the second loop reactor
- 32: feed line for comonomer to the second loop reactor
- 42: feed line for hydrogen to the second loop reactor
- 26: direct feed line to the gas phase reactor
- 3: gas-phase reactor
- 4: circulation gas compressor
- 27, 28: gas circulation line
- 23: feed line for propylene to the gas circulation line
- 33: feed line for comonomer to the gas circulation line
- 43: feed line for hydrogen to the gas circulation line
- 29: gas-phase reactor outlet
- 5: circulation gas cooler
- 13: closed loop cool water pump
- 14: closed loop cool water heat exchanger
- 29: gas phase reactor outlet line
- 6: product discharge vessel
- 34, 34': product receiver tank feed line
- 7: product receiver tank
- 35: purge bin feed line
- 8: purge bin
- 36: product outlet
- 9: propylene nitrogen recovery unit
- 46: propylene nitrogen recovery unit feed line
- 47: column supply line
- 48: nitrogen re-feed line
- 49: exhaust line
- 10: gas recovery compressor
- 11: column
- 50: line connecting product receiver tank and gas recovery compressor
- 45: outlet for oligomers
- 12: reflux recovery feed vessel
- 38: vapour recovery line to gas phase reactor
- 39: further recovery line
- 44: recovery line for condensed propylene to feed tank

The operation of the plant as shown in Fig. 2 shall be briefly described. Prepolymerization is effected in the prepolymerization reactor 0, whereby the reactants are fed via feed line(s) 20 to the prepolymerization reactor. The prepolymerization intermediate is send to the first loop reactor (1) via a first feed line (24). Polymerization takes place in the loop reactors (1, 2) by feed propylene, comonomer and chain transfer agent such as hydrogen via feed lines 21, 31, 41 and 22, 32, 42. The intermediate from the second loop reactor is fed via the direct feed line to the gas phase reactor (26). "Direct feed line" indicates the absence of a flash or similar unit. It should be understood, there is no flash unit downstream of the loop reactor(s) and upstream of the new gas phase reactor.

The new gas phase reactor (3) is operated by introducing a flow in upwards direction by use of a circulation gas compressor (4), gas circulation lines (27, 28) and a circulation gas cooler (5). This circulation cooler has a closed cooling water circuit which is coupled with the cooling system of the whole plant site by closed loop cool water heat exchanger (14).

The gas circulation line (28) or alternatively gas circulation line (27) is coupled with vapour recovery line (38). Vapour recovery line (38) enables to recycle non-condensables, comprising propylene, hydrogen and optional comonomer, back to the gas phase reactor. It has been surprisingly found that this connectivity is particularly beneficial for producing random polypropylene copolymers. The main reason therefor seems to be the high propylene content in the vapour phase when producing random propylene copolymers.

The discharge of the gas phase reactor is effected via the gas phase reactor outlet (29) into the product discharge vessel (6) and further via product receiver feed line (34) or directly via product receiver feed line (34') into product receiver tank (7) and further via purge bin feed line (35) into purge bin (8). Product receiver tank (7) is connected via line (50) with gas recovery compressor (10). The purge bin (8) is further coupled to a propylene nitrogen recovery unit (9). Nitrogen can be fed from the propylene nitrogen recovery unit (9) to purge bin (8) via nitrogen re-feed line (48). The product is sent via the product outlet (36) to further downstream processing such as pelletizing.

The recovery unit also includes distillation column (11) and coupled thereto a circuit including an outlet for oligomers (45). Distillation column (11) is connected to a reflux recovery feed vessel (12) further contributing to propylene recovery and recycling via vapour recovery line (38) and condensable recovery line (44).

### Experimental Part

Comparative Example CE1 was made only with two loop reactors coupled in series.
The production of random polypropylene copolymer was 90 kilograms per hour. Polymer was removed from the second loop reactor via flash pipe to high pressure flash where propylene was flashed at elevated pressure and fed to recovery via a scrubber, condensed and recycled to the feed tank, next the polymer was fed to low pressure bag filter and gravimetric fed to steamer and dryer.

A fluidized bed type of gas-phase reactor having a residence time of about two hours and a capacity of more than 90 kilograms per hour was built directly next to the existing plant (as used in CE1).
The polymerizations for the inventive examples were made by redirecting the reactive stream from the second loop reactor directly to the newly built gas-phase reactor.
The polymer was recovered from the new gas phase reactor as shown in Fig. 1 using a product receiver tank (7), a purge bin (8), a propylene nitrogen recovery unit (9), a distillation column (11) and a vapour recovery line (38) but not using a product discharge vessel (6) downstream of the new gas-phase reactor (3) and upstream of the product receiver tank (7).
The advantages of the method according to the present invention is reflected by doubling of the total production to 180.9 kg per hour and by increasing the catalyst mileage by 60%. In addition to that the once-through conversion was increased from 55% to 80%.

Inventive example 2. The polymer was recovered by using additionally the product discharge vessel (6) downstream of the new gas-phase reactor (3) and upstream of the product receiver tank (7). On top of the advantages of IE1, the once-through conversion increased to 90%, meaning significant reduction of load on the gas recovery compressor.

Comparative example 2: Homo-polypropylene polymer was produced on a single loop reactor and fed via flash line to high pressure flash and downstream low pressure flash and subsequently to a steaming vessel and a dryer fluidized bed. The polymer was fed to a finishing section where additives were fed during extrusion and the polymer was pelletized.

Inventive example 3: A homo-polypropylene polymer was produced on a single loop reactor and the polymerizing slurry was direct fed to a gas phase reactor with a residence time of about two hours. The propylene polymerization was continued in this gas phase reactor and the homo-polymer was recovered from the gas phase reactor as shown in Fig. 2 but again without using the product discharge vessel (6) downstream of the new gas-phase reactor (3) and upstream of the product receiver tank (7).
The advantages of the inventive example 3 are reflected by doubling of the total production to 120.6 kg per hour and by increasing the once-through conversion of propylene monomer from 61% to 80%.

**Table 1 shows the conditions and the once through conversion.**

| | | RE 1 | IE1 | IE2 | CE2 | IE3 |
|---|---|---|---|---|---|---|
| prepolymerization | | | | | | |
| production | kg/h | 0.9 | 0.9 | 0.9 | 0.6 | 0.6 |
| P | bar | 39 | 39 | 39 | 39 | 39 |
| T | °C | 20 | 20 | 20 | 20 | 20 |

| loop1 | | | | | | |
|---|---|---|---|---|---|---|
| production | kg/h | 60 | 60 | 60 | 60 | 60 |
| P | bar | 38 | 38 | 38 | 38 | 38 |
| T | °C | 70 | 70 | 70 | 70 | 70 |

| loop2 | | | | | | |
|---|---|---|---|---|---|---|
| production | kg/h | 30 | 30 | 30 | | |
| P | bar | 37 | 37 | 37 | | |
| T | °C | 70 | 70 | 70 | | |

| GPR1 | | | | | | |
|---|---|---|---|---|---|---|
| production | kg/h | | 90 | 90 | | 60 |
| P | bar | | 21 | 21 | | 21 |
| T | °C | | 85 | 85 | | 85 |
| Recirculation | kg/h | 75 | 45 | 31 | 39 | 30 |
| Total production | kg/h | 90.9 | 180.9 | 180.9 | 60.6 | 120.6 |
| once-through | | | | | 61% | 80% |
| conversion | | 55% | 80% | 90% | | |

**Table 2 compares the catalyst productivity for the configurations.**

| | Catalyst feed | Loop Reactor | | Gas Phase Reactor | | catalyst |
|---|---|---|---|---|---|---|
| | normalised | residence time | production normalised | residence time | production normalised | productivity |
| | [%] | [h] | [%] | [h] | [%] | [-] |
| CE1 two loop reactors | 80 | 1 | 100 | | | 1.25 |
| | | | | | | |
| IE1 Loop/loop/new-GPR | 100 | 0.8 | 100 | 2 | 100 | 2 |

## Claims

1. A method of revamping an existing propylene polymerization plant comprising at least one bulk loop reactor, preferably two bulk loop reactors coupled in series and optionally a gas phase reactor, whereby the existing bulk reactors have a total capacity of x tons per hour, the method comprising,
providing a new gas-phase reactor (3) having a capacity of at least 0.8 x tons per hour, next to the existing propylene polymerization plant,
connecting the new gas-phase reactor having a capacity of at least 0.8 x tons per hour, directly with the loop outlet via a direct feed line to the gas phase reactor (26); and providing a deactivation and degassing unit downstream of the new gas-phase reactor.

2. The method of claim 1, whereby the deactivation and degassing unit downstream of the new gas-phase reactor includes a product receiver tank (7), a purge bin (8), a propylene nitrogen recovery unit (9), a distillation column (11) and a vapour recovery line (38).

3. The method of claim 2, comprising
providing a product discharge vessel (6) downstream of the new gas-phase reactor (3) and upstream of the product receiver tank (7).

4. The method of any of the preceding claims, wherein the product receiver tank (7) is coupled to said distillation column (11) with a compressor (10) between.

5. The method of any of the preceding claims, wherein the said distillation column (11) is coupled to a reflux recovery feed vessel (12), whereby said reflux recovery feed vessel (12) is coupled with the vapour recovery line (38).

6. The method of any of the preceding claims, wherein the transition from the existing polypropylene plant to the revamped polypropylene plant does not involve a shutdown of more than 24 hours.

7. The method of any of the preceding claims, for increasing the once-through conversion, and/or increasing the catalyst mileage and/or increasing the throughput of an existing polypropylene plant.

8. The method according to any of the preceding claims, whereby a gas circulation line (28) or alternatively a gas circulation line (27) as well as a vapour recovery line (3) is present and whereby the gas circulation line (28) or alternatively the gas circulation line (27) is coupled with the vapour recovery line (38).

9. The method according to any of the preceding claims, whereby the revamped propylene polymerization plant is suitable for producing random polypropylene copolymer and/or polypropylene homopolymer.

10. The method according to any of the preceding claims, whereby the new gas-phase reactor (3) has a capacity of 0.9 x tons - 1.2 x tons per hour.

11. The method according to any of the preceding claims, whereby no flash stage is present downstream of the loop reactor(s) and upstream of the new gas phase reactor.

12. The method according to claim 1, whereby the deactivation and degassing unit downstream of the new gas-phase reactor includes a product receiver tank (7), a purge bin (8), a propylene nitrogen recovery unit (9), a distillation column (11) and a vapour recovery line (38), and whereby the method further comprises providing a product discharge vessel (6) downstream of the new gas-phase reactor (3) and upstream of the product receiver tank (7), wherein further the product receiver tank (7) is coupled to said distillation column (11) with a compressor (10) between, and wherein said distillation column (11) is coupled to a reflux recovery feed vessel (12), whereby said reflux recovery feed vessel (12) is coupled with the vapour recovery line (38).

13. Use of the method according to any of claim 12 for increasing the once-through conversion with respect to the once-through conversion of existing polypropylene plant.

14. Use of the method according to any of claim 12 for increasing catalyst mileage.

15. Use of the method according to any of claim 12 for increasing the throughput of an existing propylene polymerization plant.
